# FASCICULE DE BREVET EUROPEEN

(11) **EP 3 083 280 B1**
(45) Date de publication et mention de la délivrance du brevet: **09.10.2019**
(21) Numéro de dépôt: 14806293.8
(22) Date de dépôt: 04.12.2014
(51) Int. Cl.: B60C 11/00, B60C 11/03, B60C 1/00

(54) **PNEUMATIQUE COMPORTANT UNE BANDE DE ROULEMENT PERFECTIONNÉE**
REIFEN MIT VERBESSERTER LAUFFLÄCHE
TYRE WITH IMPROVED TREAD

(30) Priorité: 19.12.2013 FR 1363034
(43) Date de publication de la demande: 26.10.2016
(73) Titulaire: Compagnie Générale des Etablissements Michelin, 63000 Clermont-Ferrand (FR)
(72) Inventeur: BOURGEOIS, Frédéric, F-63040 Clermont-Ferrand Cedex 9 (FR); BRUNEAU, François-Xavier, F-63040 Clermont-Ferrand Cedex 9 (FR); FRAYSSE, Patrice, F-63040 Clermont-Ferrand Cedex 9 (FR); IGIER, Emmanuel, F-63040 Clermont-Ferrand Cedex 9 (FR)
(74) Mandataire: Millanvois, Patrick Jacques Jean
(86) Numéro de dépôt international: PCT/EP2014/076495
(87) Numéro de publication internationale: WO 2015/090983

(56) Documents cités:
- EP-A1- 2 565 056
- FR-A1- 2 952 855

## Description

### DOMAINE DE L'INVENTION

La présente invention concerne les pneumatiques pour véhicules de tourisme. Elle concerne plus particulièrement les pneumatiques adaptés à une conduite routière sportive.

### ARRIERE-PLAN

L'adhérence des pneumatiques sur le sol sur lequel ils roulent est une des caractéristiques les plus importantes du point de vue de la sécurité du conducteur d'un véhicule équipé de pneumatiques. Elle est aussi déterminante pour les performances du véhicule en conduite routière sportive : si ses pneumatiques perdent leur pouvoir directeur par défaut d'adhérence, le véhicule n'est plus dirigeable.

Bien entendu, un véhicule, même s'il est destiné à une utilisation sportive, est amené à rouler dans des circonstances climatiques variables. Il est donc connu de pourvoir le pneumatique de moyens permettant une bonne adhérence sur sol sec et sur sol mouillé. Il est notamment possible d'adapter au moins une partie de la sculpture de la bande de roulement à une utilisation sur sol mouillé, par exemple en prévoyant des évidements permettant de drainer et/ou de stocker de l'eau, ou en multipliant des arêtes de sculpture permettant de transpercer le film d'eau formé entre la bande de roulement et le sol. Il est également possible de varier les matériaux formant la bande de roulement, en utilisant des compositions caoutchouteuses adaptées plus particulièrement à une utilisation sur sol mouillé et/ou sur sol sec. Une bande de roulement comportant les deux types de composition caoutchouteuse permet d'obtenir une bonne adhérence en toutes circonstances. Des exemples d'un tel pneumatique est donné dans les documents EP 1 308 319**,** EP 2 565 056 **et** FR 2 952 855.

En condition de conduite routière sportive, les pneumatiques d'un véhicule subissent d'importants efforts transversaux lorsque le véhicule équipé des pneumatiques effectue un virage. Au cours du virage, ces efforts transversaux induisent, pour l'aire de contact entre chaque pneumatique et le sol sur lequel il roule, une déformation analogue à une mise en trapèze : le côté de l'aire de contact qui est le plus éloigné du centre du virage se rallonge, alors que le côté de l'aire de contact qui est le plus près du centre du virage se raccourcit.

Le « côté de l'aire de contact le plus éloigné du centre du virage » est le côté par lequel s'effectue, dans la direction de la vitesse de dérive du centre de la roue sur laquelle le pneumatique est monté, l'entrée des éléments de la bande de roulement au contact avec le sol. Pour cette raison, il est parfois appelé « bord d'attaque (transversal) » ou « leading edge ». Le côté opposé, c'est-à-dire, le « côté de l'aire de contact le plus près du centre du virage » est parfois appelé « bord de fuite (transversal) » ou « trailing edge ».

Cette déformation de « mise en trapèze » modifie à la fois la charge portée par les différentes nervures de la bande de roulement et la contribution de chacune à l'effort transversal développé par le pneumatique. Pour une charge donnée, à porter par l'un des pneumatiques du véhicule dans un régime de virage donné, les nervures qui se sont allongées portent une plus grande part de la charge totale portée par le pneumatique. Les nervures qui se sont raccourcies portent une part d'autant moindre de la charge totale portée par le pneumatique. Pour un effort transversal donné, délivré par l'un des pneumatiques dans un régime de virage donné, il en résulte que les nervures les plus chargées (c'est-à-dire, en général, celles qui se trouvent du côté le plus éloigné du centre du virage) sont celles qui assurent aussi la plus forte contribution à l'effort transversal total.

Les compositions caoutchouteuses adaptées à une utilisation sur sol mouillé sont en général plus fragiles vis-à-vis des contraintes thermiques et mécaniques très élevées générées dans l'aire de contact d'un pneumatique en régime de virage sévère sur un revêtement routier sec. Si on pourvoit la bande de roulement du pneumatique de portions en composition caoutchouteuse de meilleure adhérence sur sol sec et de portions en composition caoutchouteuse de meilleure adhérence sur sol mouillé, il est préférable de prévoir que le composition caoutchouteuse de meilleure adhérence sur sol sec soit placé sur le côté de l'aire de contact qui est le plus éloigné du centre du virage. Ainsi, même si l'aire de contact se trouvera mise en trapèze, le pneumatique gardera une bonne adhérence sur sol sec, c'est-à-dire une bonne capacité à développer un effort transversal important. En outre, comme les pressions de contact au sol sont plus fortes sur ce même côté de l'aire de contact (qui est le plus éloigné du centre du virage), le drainage de l'eau mouillant le revêtement du sol est en général plutôt satisfaisant dans cette partie de l'aire de contact. Par conséquent, cette zone de la bande de roulement se prête bien à l'utilisation d'une composition caoutchouteuse de meilleure adhérence sur sol sec. En d'autres termes, le pneumatique roule, dans cette zone, comme s'il roulait sur du sol sec. Il n'est donc pas utile de réaliser cette partie de la bande de roulement dans une composition caoutchouteuse de meilleure adhérence sur sol mouillé dont les performances sur sol sec sont moindres que celles d'une composition caoutchouteuse de meilleure adhérence sur sol sec. Le pneumatique « Pilot Sport 2 » vendu par Michelin est un exemple d'un pneumatique dans la bande de roulement duquel les compositions caoutchouteuses sont disposées de cette manière.

Malgré les bonnes performances de ce pneumatique en termes d'adhérence, il existe toujours un besoin grandissant d'améliorer le compromis d'adhérence sur sol sec et sur sol mouillé des pneumatiques et plus particulièrement, des pneumatiques adaptés à une conduite routière sportive. C'est pourquoi, la demanderesse a proposé, dans ses demandes de brevet WO 2011/076680 A1 et WO 2012/175444 A1**,** de découper la bande de roulement en plusieurs zones axiales et de répartir les compositions caoutchouteuses de meilleure adhérence sur sol mouillé et les compositions caoutchouteuses de meilleure adhérence sur sol sec de manière astucieuse sur ces zones. Si ces solutions ont permis d'obtenir un meilleur compromis sur sol sec et sur sol mouillé, elles ne sont cependant pas optimales en termes d'adhérence sur sol mouillé, ainsi qu'en résistance au roulement.

### RESUME DE L'INVENTION

Un des objectifs de la présente invention est donc de prévoir un pneumatique permettant un meilleur compromis d'adhérence sur sol sec et sur sol mouillé, tout en améliorant la résistance au roulement.

Cet objectif est atteint par un pneumatique ayant un sens de montage prédéterminé, dans lequel une portion de la partie de la bande de roulement qui est traditionnellement réservée aux compositions caoutchouteuses de meilleure adhérence sur sol mouillé, est réalisée dans une composition caoutchouteuse de meilleure adhérence sur sol sec et une portion de la partie de la bande de roulement qui est traditionnellement réservée aux compositions caoutchouteuses de meilleure adhérence sur sol sec, est réalisée dans une composition caoutchouteuse de meilleure adhérence sur sol mouillé. Cette partie s'étend jusqu'à une profondeur de la bande de roulement qui est inférieure à la profondeur des rainures circonférentielles prévues dans cette bande de roulement.

Plus précisément, l'objectif est atteint par un pneumatique destiné à être monté sur une jante de montage d'une roue d'un véhicule et ayant un sens de montage sur le véhicule prédéterminé, comportant une bande de roulement s'étendant entre un bord axial extérieur et un bord axial intérieur, le bord axial intérieur étant le bord destiné à être monté du côté de la caisse du véhicule lorsque le pneumatique est monté sur le véhicule selon ledit sens de montage prédéterminé, la distance axiale entre le bord axial extérieur et le bord axial intérieur définissant une largeur axiale L de la bande de roulement. La bande de roulement comporte, dans toute section radiale, au moins une nervure centrale et deux nervures latérales, les nervures latérales étant disposées de part et d'autre de ladite au moins une nervure centrale, les nervures étant séparées par des rainures circonférentielles comportant chacune deux parois latérales. Chaque nervure centrale est délimitée axialement par une frontière extérieure et par une frontière intérieure, chaque frontière étant formée par une paroi latérale d'une rainure circonférentielle, la frontière intérieure étant axialement plus proche du bord axial intérieur de la bande de roulement que la frontière extérieure, la distance axiale, sur la surface de roulement à l'état neuf, entre la frontière extérieure et la frontière intérieure définissant une largeur axiale LC de la nervure centrale. Une première nervure latérale est adjacente au bord axial extérieur de la bande de roulement et délimitée axialement par une frontière extérieure (FE1) et une frontière intérieure, la frontière extérieure se situant, sur toute la profondeur radiale de la première nervure latérale, à une distance axiale DE1 du bord axial intérieur de la bande de roulement, la distance DE1 étant supérieure ou égale à 0.95·L, la frontière intérieure étant formée, au moins en partie, par une paroi latérale d'une rainure circonférentielle, la distance axiale entre la frontière extérieure et la frontière intérieure définissant une largeur axiale LL1 de la première nervure latérale. La première nervure latérale et au moins une (et de préférence chacune) des nervures centrales comportent une première portion réalisée dans une composition caoutchouteuse comportant au moins un élastomère et au moins une charge renforçante comportant un noir de carbone, le noir de carbone représentant un pourcentage supérieur ou égal à 50 % et inférieur ou égal à 100 % du poids de la totalité de la charge renforçante, et une deuxième portion réalisée dans une composition caoutchouteuse comportant au moins un élastomère et au moins une charge renforçante, dont éventuellement un noir de carbone, le noir de carbone représentant un pourcentage supérieur ou égal à 0 % et inférieur ou égal à 50 % du poids de la totalité de la charge renforçante. La première portion de la première nervure latérale s'étend de la frontière extérieure de la première nervure latérale axialement vers l'intérieur, la largeur axiale LP1 de cette portion étant, sur toute la profondeur radiale de la nervure latérale, supérieure ou égale à 20% de la largeur axiale LL1 de la première nervure latérale. La deuxième portion de la première nervure latérale est axialement adjacente à la première portion de la première nervure latérale. La première portion de la nervure centrale s'étend : axialement à partir de la frontière extérieure de la nervure centrale, la largeur axiale LPC de cette portion étant, sur au moins 75% (et de préférence 90%, et encore plus préférentiellement sur 100%) de la profondeur radiale PR de la nervure centrale, supérieure ou égale à 20% de la largeur axiale LC de la nervure centrale, et radialement à partir de la surface de roulement, à l'état neuf, jusqu'à une profondeur radiale P, la profondeur radiale P pouvant varier en fonction de la position axiale, la profondeur P étant, sur au moins 75% (et de préférence 90%, et encore plus préférentiellement sur 100%) de l'étendue axiale de la première portion de la nervure centrale, supérieure ou égale à 0.2·PR et inférieure ou égale à 0.8·PR (et de préférence inférieure ou égale à 0.75·PR). La deuxième portion de la nervure centrale est axialement adjacente à la première portion de la nervure centrale. Les compositions caoutchouteuses formant la deuxième portion de la première nervure latérale, la portion radialement à l'intérieur de la première portion de la nervure centrale et la deuxième portion de la nervure centrale ont toutes une valeur tan δ0 qui est inférieure à la valeur tan δ0 des compositions caoutchouteuses formant la première portion de la première nervure latérale et la première portion de la nervure centrale, où tan δ0 désigne la valeur de tan δ mesurée à la température de 0° C et sous une contrainte de 0.7 MPa.

Ce pneumatique permet d'obtenir une nette amélioration en adhérence sur sol mouillé tout en conservant une excellente adhérence sur sol sec et en améliorant la résistance au roulement.

De préférence, ledit pourcentage du noir de carbone en poids de la totalité de la charge renforçante n'est pas le même pour ladite première composition caoutchouteuse et ladite deuxième composition caoutchouteuse ; la différence entre le pourcentage de noir de carbone de ladite première composition caoutchouteuse et le pourcentage de noir de carbone de ladite deuxième composition caoutchouteuse est de préférence supérieure à 5 points et encore plus préférentiellement supérieure à 10 points.

Selon un premier mode de réalisation avantageux, la largeur axiale LP1 de la première portion de la première nervure latérale est, sur toute la profondeur radiale de la première nervure latérale, inférieure ou égale à 60% de la largeur axiale LL1 de la première nervure latérale. Ainsi, l'on préserve l'adhérence sur sol mouillé.

Selon un deuxième mode de réalisation avantageux, la largeur axiale LPC de la première portion de la nervure centrale est, sur toute sa profondeur radiale, inférieure ou égale à 60% de la largeur axiale LC de la nervure centrale. Ce mode de réalisation contribue également à préserver une bonne adhérence sur sol mouillé.

Selon un troisième mode de réalisation avantageux, une seconde nervure latérale est adjacente au bord axial intérieur de la bande de roulement et délimitée axialement par une frontière extérieure et une frontière intérieure, la frontière intérieure se situant, sur toute la profondeur radiale de la seconde nervure latérale, à une distance axiale DE2 du bord axial extérieur de la bande de roulement, la distance DE2 étant supérieure ou égale à 0.95·L, la frontière extérieure étant formée, au moins en partie, par une paroi latérale d'une rainure circonférentielle, la distance axiale entre la frontière extérieure et la frontière intérieure définissant une largeur axiale LL2 de la seconde nervure latérale. Cette largeur axiale peut varier selon la profondeur radiale de la seconde nervure latérale. La seconde nervure latérale comporte une première portion réalisée dans une composition caoutchouteuse comportant au moins un élastomère et au moins une charge renforçante comportant un noir de carbone, le noir de carbone représentant un pourcentage supérieur ou égal à 50 % et inférieur ou égal à 100 % du poids de la totalité de la charge renforçante, et une deuxième portion réalisée dans une composition caoutchouteuse comportant au moins un élastomère et au moins une charge renforçante, dont éventuellement un noir de carbone, le noir de carbone représentant un pourcentage supérieur ou égal à 0 % et inférieur ou égal à 50 % du poids de la totalité de la charge renforçante. La première portion de la seconde nervure latérale s'étend de la frontière extérieure de la seconde nervure latérale axialement vers extérieur, la largeur axiale LP2 de cette portion étant, sur au moins 75% (et de préférence 100%) de la profondeur radiale de la seconde nervure latérale, supérieure ou égale à 20% de la largeur axiale LL2 de la seconde nervure latérale, et la deuxième portion de la seconde nervure latérale est axialement adjacente à la première portion de la seconde nervure latérale. La composition caoutchouteuse formant la deuxième portion de la seconde nervure latérale a une valeur tan δ0 qui est inférieure à la valeur tan δ0 de la composition caoutchouteuse formant la première portion de la seconde nervure latérale, où tan δ0 désigne la valeur de tan δ mesurée à la température de 0° C et sous une contrainte de 0.7 MPa. Ce mode de réalisation permet d'augmenter l'adhérence sur sol sec du pneumatique situé à l'intérieur du virage ; ce dernier assure ainsi une plus forte contribution à l'effort transversal total.

De manière préférentielle, la largeur axiale LP2 de la première portion de la seconde nervure latérale est inférieure ou égale à 60% de la largeur axiale LL2 de la seconde nervure latérale. Cette limitation contribue à préserver l'adhérence sur sol mouillé.

Selon un quatrième mode de réalisation avantageux, pour chaque nervure comportant une première et une deuxième portion, la différence entre la valeur tan δ0 de la composition caoutchouteuse formant la première portion de la nervure et la valeur tan δ0 de la composition caoutchouteuse formant la deuxième portion de la même nervure est supérieure ou égale à 0.05. Comme cela a déjà été dit, tan δ0 désigne la valeur de tan δ mesurée à la température de 0° C et sous une contrainte de 0.7 MPa.

Selon un cinquième mode de réalisation avantageux, pour chaque nervure comportant une première et une deuxième portion, la composition caoutchouteuse formant la première portion de la nervure a en outre une valeur tan δ10 qui est inférieure à la valeur tan δ10 de la composition caoutchouteuse formant la deuxième portion de la même nervure, où tan δ10 désigne la valeur de tan δ mesurée à la température de 10° C et sous une contrainte de 0.7 MPa.

De manière préférentielle, pour chaque nervure comportant une première et une deuxième portion, la différence entre la valeur tan δ10 de la composition caoutchouteuse formant la première portion de la nervure et la valeur tan δ10 de la composition caoutchouteuse formant la deuxième portion de la même nervure est supérieure ou égale à 0.05.

Selon un sixième mode de réalisation avantageux, la même composition caoutchouteuse forme la première portion de toutes les nervures comportant une première et une deuxième portion, et la même composition caoutchouteuse forme la deuxième portion de ces nervures. Ce mode de réalisation a pour avantage de faciliter la mise en oeuvre industrielle.

Bien entendu, il est possible et même souhaitable de combiner deux ou plusieurs des modes de réalisations décrits.

### BREVE DESCRIPTION DES DESSINS

La figure 1 représente un pneumatique selon l'art antérieur.
La figure 2 représente une vue en perspective partielle d'un pneumatique selon l'art antérieur.
La figure 3 représente, en coupe radiale, une portion d'un pneumatique selon l'art antérieur.
Les figures 4 et 5 illustrent comment le bord axial d'une bande de roulement est déterminé.
La figure 6 illustre les termes 'bord intérieur' et 'bord extérieur' d'une bande de roulement.
La figure 7 illustre la profondeur radiale d'une nervure centrale.
La figure 8 représente schématiquement le sommet d'un pneumatique selon l'art antérieur, en coupe radiale.
Les figures 9 et 14 illustrent les différentes grandeurs caractérisant les nervures latérales et les nervures centrales.
Les figures 10 à 13 représentent schématiquement le sommet d'un pneumatique selon un mode de réalisation de l'invention, en coupe radiale.

### DESCRIPTION DETAILLEE DES DESSINS

Dans l'emploi du terme « radial » il convient de distinguer plusieurs utilisations différentes du mot par la personne du métier. Premièrement, l'expression se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un fil ou une armature est dit « radial(e) » lorsque le fil ou les éléments de renforcement de l'armature font avec la direction circonférentielle un angle supérieur ou égal à 80° et inférieur ou égal à 90°. Précisions que dans le présent document, le terme « fil » doit être entendu dans un sens tout à fait général et comprend les fils se présentant sous la forme de monofilaments, de multifilaments, d'un câble, d'un retors ou d'un assemblage équivalent, et ceci, quelle que soit la matière constituant le fil ou le traitement de surface pour favoriser sa liaison avec le caoutchouc.

Enfin, par « coupe radiale » ou « section radiale » on entend ici une coupe ou une section selon un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8. Le « plan médian » du pneumatique est le plan qui est perpendiculaire à l'axe de rotation du pneumatique et qui se situe à équidistance des structures annulaires de renforcement de chaque bourrelet.

Une direction « circonférentielle » est une direction qui est perpendiculaire à la fois à un rayon du pneumatique et à la direction axiale. Une « section circonférentielle » est une section selon un plan perpendiculaire à l'axe de rotation du pneumatique.

Par « surface de roulement » on entend ici l'ensemble des points de la bande de roulement d'un pneumatique qui sont susceptibles d'entrer en contact avec le sol lorsque le pneumatique roule.

Une nervure est dite « adjacente au bord extérieur (ou intérieur) » de la bande de roulement lorsqu'elle comporte le bord extérieur (ou intérieur) ou lorsqu'il n'y a pas d'autre nervure qui serait disposée axialement entre ledit bord extérieur (ou intérieur) et la nervure en question.

La « profondeur radiale » d'une nervure se définit comme la profondeur maximale de la rainure adjacente à la nervure si la nervure n'est délimitée que par une seule rainure, comme c'est en général le cas des nervures latérales. Si la nervure est délimitée axialement par deux rainures (comme c'est le cas des nervures centrales), sa profondeur radiale est définie comme la plus grande des profondeurs maximales de ces deux rainures adjacentes.

L'expression « composition caoutchouteuse » désigne une composition de caoutchouc comportant au moins un élastomère et une charge.

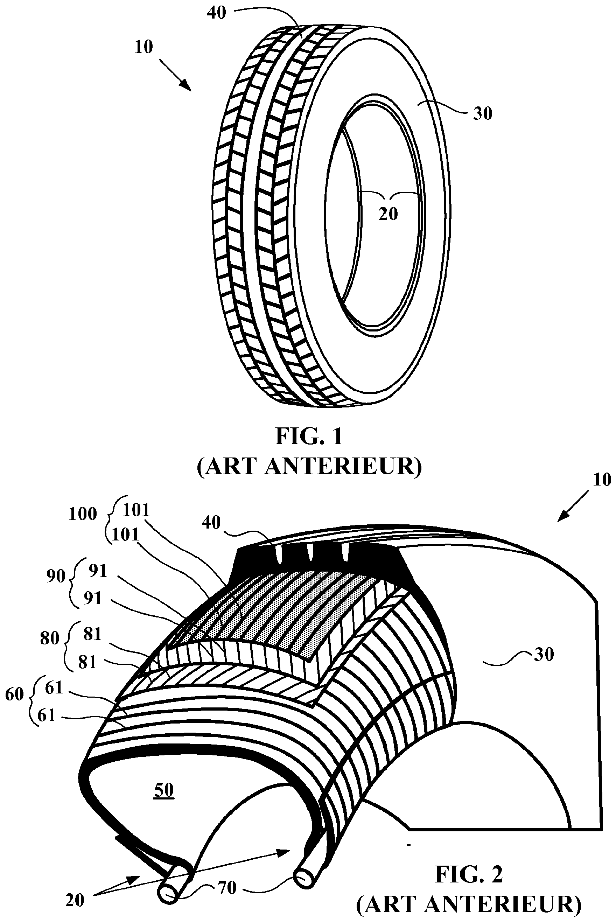

La figure 1 représente schématiquement un pneumatique 10 selon l'art antérieur. Le pneumatique 10 comporte un sommet comprenant une armature de sommet (invisible à la figure 1) surmontée d'une bande de roulement 40, deux flancs 30 prolongeant le sommet radialement vers l'intérieur, ainsi que deux bourrelets 20 radialement intérieurs aux flancs 30.

La figure 2 représente schématiquement une vue en perspective partielle d'un pneumatique 10 selon l'art antérieur et illustre les différentes composantes du pneumatique. Le pneumatique 10 comprend une armature de carcasse 60 constituée de fils 61 enrobés de composition caoutchouteuse, et deux bourrelets 20 comportant chacun des structures annulaires de renforcement 70 qui maintiennent le pneumatique 10 sur la jante (non représentée). L'armature de carcasse 60 est ancrée dans chacun des bourrelets 20. Le pneumatique 10 comporte en outre une armature de sommet comprenant deux nappes 80 et 90. Chacune des nappes 80 et 90 est renforcée par des éléments de renforcement 81 et 91 filaires qui sont parallèles dans chaque couche et croisés d'une couche à l'autre, en faisant avec la direction circonférentielle des angles compris entre 10° et 70°. Le pneumatique comporte encore une armature de frettage 100, disposée radialement à l'extérieur de l'armature de sommet, cette armature de frettage étant formée d'éléments de renforcement 101 orientés circonférentiellement et enroulés en spirale. Une bande de roulement 40 est posée sur l'armature de frettage ; c'est cette bande de roulement 40 qui assure le contact du pneumatique 10 avec la route. Le pneumatique 10 représenté est un pneu « tubeless » : il comprend une « gomme intérieure » 50 en composition caoutchouteuse imperméable au gaz de gonflage, recouvrant la surface intérieure du pneumatique.

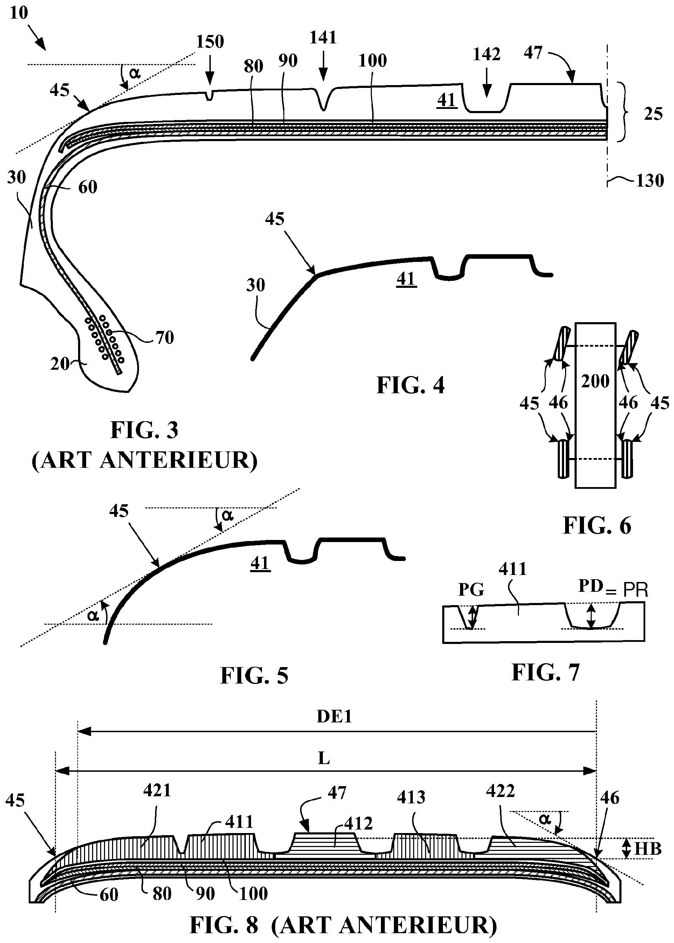

La figure 3 représente schématiquement, en coupe radiale, une portion d'un pneumatique 10 de référence, de type « Pilot Sport 2 » vendu par Michelin. Le pneumatique 10 comporte deux bourrelets 20 destinés à entrer en contact avec une jante de montage (non représentée), chaque bourrelet 20 comportant une pluralité de structures annulaires de renforcement 70. Deux flancs 30 prolongent les bourrelets 20 radialement vers l'extérieur et s'unissent dans un sommet 25 comprenant une armature de sommet formée d'une première couche d'éléments de renforcement 80 et d'une deuxième couche d'éléments de renforcement 90, et surmontée radialement d'une armature de frettage 100, qui est elle-même surmontée radialement d'une bande de roulement. Deux rainures 141 et 142 sont visibles ; l'incision 150 n'est pas considérée comme une rainure au sens de l'invention car seule une incision ayant, lorsque le pneumatique est à l'état neuf, une profondeur radiale supérieure ou égale à 5 mm et une largeur axiale maximale supérieure ou égale à 2 mm est considérée comme une « rainure » au sens de ce document. Le plan médian du pneumatique est indiqué par la référence 130.

La manière dont on détermine les bords axiaux d'une bande de roulement est illustrée aux figures 4 et 5 qui montrent chacune le profil d'une demi-bande de roulement 41 et de la partie du flanc 30 qui lui est adjacente. Dans certaines architectures de pneumatique, la transition de la bande de roulement vers le flanc est très nette, comme dans le cas représenté à la figure 4 et la détermination du bord axial 45 de la demi-bande de roulement 41 est intuitive. Il existe cependant des architectures de pneumatique où la transition entre bande de roulement et flanc est continue. Un exemple est représenté à la figure 5. On détermine alors le bord de la bande de roulement comme suit. On trace, dans une coupe radiale du pneumatique, la tangente à la surface de roulement du pneumatique en tout point de la surface de roulement dans la zone de transition entre la bande de roulement et le flanc. Le bord axial est le point dans lequel l'angle α (alpha) entre ladite tangente et une direction axiale est égal à 30°. Lorsqu'il existe plusieurs points pour lesquels l'angle α (alpha) entre ladite tangente et une direction axiale est égal à 30°, on retient le point radialement le plus à l'extérieur. Dans le cas du pneumatique représenté à la figure 3, le bord axial 45 a été déterminé de cette manière.

Chaque couche d'éléments de renforcement 80 et 90 comprend des éléments de renforcement filaires, enrobés dans une matrice formée de composition caoutchouteuse. Les éléments de renforcement de chaque couche sont substantiellement parallèles entre eux ; les éléments de renforcement des deux couches sont croisés d'une couche à l'autre selon un angle d'environ 20°, comme cela est bien connu de la personne du métier pour les pneumatiques dits radiaux.

Le pneumatique 10 comporte encore une armature de carcasse 60 qui s'étend depuis les bourrelets 20 à travers les flancs 30 jusqu'au sommet 25. Cette armature de carcasse 60 comporte ici des éléments de renforcement filaires orientés radialement, c'est-à-dire faisant avec la direction circonférentielle un angle supérieur ou égal à 80° et inférieur ou égal à 90°.

L'armature de carcasse 60 comporte une pluralité d'éléments de renforcement de carcasse ; elle est ancrée dans les deux bourrelets 20 entre les structures annulaires de renforcement 70.

La figure 8 représente schématiquement le sommet d'un pneumatique selon le document WO 2011/076680 A1**,** destiné à être monté sur une jante de montage d'une roue d'un véhicule et ayant un sens de montage, sur le véhicule, prédéterminé. Il comporte une bande de roulement s'étendant entre un bord axial extérieur 45 et un bord axial intérieur 46, le bord axial intérieur 46 étant le bord destiné à être monté du côté de la caisse du véhicule lorsque le pneumatique est monté sur le véhicule selon ledit sens de montage prédéterminé, comme cela est suggéré à la figure 6 qui représente schématiquement un véhicule 200. La surface de roulement est indiquée par la référence 47.

La bande de roulement comporte, dans toute section radiale, trois nervures centrales 411 à 413 et deux nervures latérales 421 et 422 disposées de part et d'autre des nervures centrales. Les nervures sont séparées par des rainures circonférentielles comportant chacune deux parois latérales.

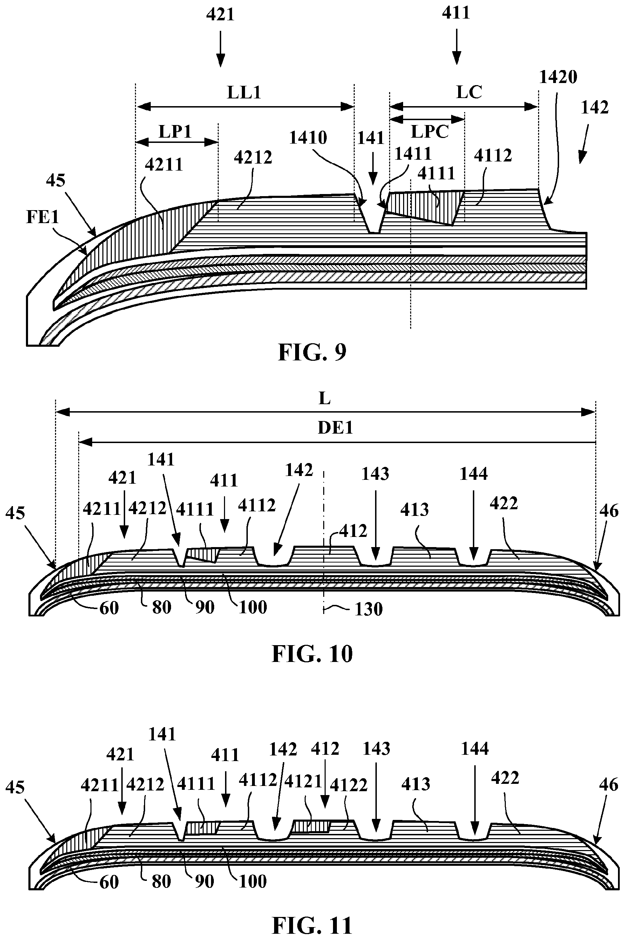

La figure 9 illustre les différents paramètres caractérisant la première nervure latérale 421 et la nervure centrale 411. La nervure centrale 411 est délimitée axialement par une frontière extérieure, formée par la paroi latérale 1411 de la rainure circonférentielle 141 et située du côté du bord axial 45 extérieur de la bande de roulement, et une frontière intérieure, formée par la paroi latérale 1420 de la rainure circonférentielle 142 et située du côté du bord axial intérieur 46 de la bande de roulement (voir figure 8). La distance axiale, sur la surface de roulement à l'état neuf, entre la frontière extérieure et la frontière intérieure définit la largeur axiale LC de la nervure centrale.

La première nervure latérale 421 est adjacente au bord axial extérieur 45 de la bande de roulement et délimitée axialement par une frontière extérieure FE1 et une frontière intérieure, qui est formée par la paroi latérale 1410 de la rainure circonférentielle 141. La frontière extérieure se situe, sur toute la profondeur radiale de la première nervure latérale 421, à une distance axiale DE1 (voir figure 8) du bord axial intérieur 46 de la bande de roulement, la distance DE1 étant supérieure ou égale à 0.95·L. A la figure 8, on a indiqué la distance axiale DE1 de la première nervure latérale 421 sur la surface de roulement à l'état neuf; DE1 est ici égal à 0.96·L. La distance axiale entre la frontière extérieure et la frontière intérieure définit une largeur axiale LL1 (voir figure 9) de la première nervure latérale 421. En l'occurrence, cette largeur axiale varie selon la profondeur radiale de la première nervure latérale 421.

Dans le sommet représenté à la figure 8, la nervure centrale 412 et la seconde nervure latérale 422 sont réalisées dans une première composition caoutchouteuse comportant un élastomère et au moins une charge renforçante dont éventuellement un noir de carbone, le noir de carbone représentant un pourcentage supérieur ou égal à 0 % et inférieur ou égal à 50 % du poids de la totalité de la charge renforçante.

En revanche, la première nervure latérale 421 et les nervures centrales 411 et 413 sont réalisées dans une deuxième composition caoutchouteuse comportant un élastomère et au moins une charge renforçante dont un noir de carbone, le noir de carbone représentant un pourcentage supérieur ou égal à 50 % et inférieur ou égal à 100 % du poids de la totalité de la charge renforçante.

La première composition caoutchouteuse a une valeur tan δ0 qui est inférieure à la valeur tan δ0 de la deuxième composition caoutchouteuse, où tan δ0 désigne la valeur de tan δ mesurée à la température de 0° C et sous une contrainte de 0.7 MPa.

Les nervures centrales 411 et 413 sont entièrement réalisées dans cette deuxième composition caoutchouteuse ; autrement dit, pour chacune de ces nervures, la portion réalisée dans cette deuxième composition caoutchouteuse a une largeur axiale égale à 100% de la largeur axiale LC de la nervure centrale.

Si cette solution a permis d'obtenir un excellent compromis sur sol sec et sur sol mouillé, elle reste perfectible en termes d'adhérence sur sol mouillé et de résistance au roulement. Une telle amélioration est obtenue avec un pneumatique selon un mode de réalisation de l'invention. Les figures 9 à 12 représentent des modes de réalisation de ce pneumatique.

Le pneumatique dont le sommet est représenté à la figure 10 est destiné à être monté sur une jante de montage d'une roue d'un véhicule (non représentée) ; il a un sens de montage sur le véhicule prédéterminé, comportant une bande de roulement s'étendant entre un bord axial extérieur 45 et un bord axial intérieur 46, le bord axial intérieur 46 étant le bord destiné à être monté du côté de la caisse du véhicule lorsque le pneumatique est monté sur le véhicule selon ledit sens de montage prédéterminé (voir figure 6). La distance axiale entre le bord axial extérieur 45 et le bord axial intérieur 46 définit la largeur axiale L de la bande de roulement.

La bande de roulement comporte, dans toute section radiale, trois nervures centrales 411 à 413 et deux nervures latérales 421 et 422, les nervures latérales 421 et 422 étant disposées de part et d'autre des nervures centrales 411 à 413. Les nervures sont séparées par des rainures circonférentielles 141 à 144 comportant chacune deux parois latérales. Chacune des nervures centrales 411 à 413 est délimitée axialement par une frontière extérieure et par une frontière intérieure, chaque frontière étant formée, sur toute la profondeur des rainures circonférentielles adjacentes (141 à 143), par une paroi latérale d'une rainure circonférentielle, la frontière intérieure étant axialement plus proche du bord axial intérieur 46 de la bande de roulement que la frontière extérieure. La distance axiale, sur la surface de roulement à l'état neuf, entre la frontière extérieure et la frontière intérieure définissant une largeur axiale LC pour chacune des nervures centrales (voir figure 9 où la largeur axiale LC est indiquée pour la nervure centrale 411). En l'occurrence, ces largeurs axiales LC sont sensiblement identiques pour les trois nervures centrales 411 à 413, mais il pourrait en être autrement.

La première nervure latérale 421 est adjacente au bord axial extérieur 45 de la bande de roulement. En l'occurrence, la première nervure latérale 421 ne comporte pas le bord axial extérieur 45 car elle est recouverte à son extrémité d'une portion de la composition caoutchouteuse qui forme le flanc du pneumatique, mais elle est néanmoins adjacente au bord axial extérieur 45 dans la mesure où il n'y a pas d'autre nervure située entre le bord axial extérieur 45 et la première nervure latérale 421. La première nervure latérale 421 est délimitée axialement par une frontière extérieure FE1 (voir figure 9) et une frontière intérieure qui coïncide, sur toute la profondeur de la rainure circonférentielle 141, avec la paroi latérale 1410 de la rainure circonférentielle 141 (voir figure 9). La frontière extérieure se situe, sur toute la profondeur radiale de la première nervure latérale, à une distance axiale DE1 du bord axial intérieur de la bande de roulement, la distance DE1 étant supérieure ou égale à 0.95·L. A la figure 10, on a indiqué la distance axiale DE1 de la première nervure latérale 421 sur la surface de roulement à l'état neuf; DE1 est ici égal à 0.96·L. La distance axiale entre la frontière extérieure et la frontière intérieure définit une largeur axiale LL1 (voir figure 9) de la première nervure latérale 421. En l'occurrence, cette largeur axiale varie selon la profondeur radiale de la première nervure latérale 421.

La première nervure latérale 421 et la nervures centrales 411 comportent chacune une première portion (respectivement 4211 et 4111) réalisée dans une composition caoutchouteuse comportant au moins un élastomère et au moins une charge renforçante comportant un noir de carbone, le noir de carbone représentant un pourcentage supérieur ou égal à 50 % et inférieur ou égal à 100 % du poids de la totalité de la charge renforçante, et une deuxième portion (respectivement 4212 et 4112) réalisée dans une composition caoutchouteuse comportant au moins un élastomère et au moins une charge renforçante, dont éventuellement un noir de carbone, le noir de carbone représentant un pourcentage supérieur ou égal à 0 % et inférieur ou égal à 50 % du poids de la totalité de la charge renforçante.

La première portion 4211 de la première nervure latérale 421 s'étend de la frontière extérieure FE1 (voir figure 9) de la première nervure latérale 421 axialement vers l'intérieur, la largeur axiale LP1 (voir figure 9) de cette portion étant, sur toute la profondeur radiale de la nervure latérale, supérieure ou égale à 20% de la largeur axiale LL1 de la première nervure latérale 421. A la figure 9, on a indiqué la largeur axiale LP1 de la première portion 4211 de la première nervure latérale 421 sur la surface de roulement à l'état neuf ; la largeur LP1 est ici égale à 0.40·LL1. La deuxième portion 4212 de la première nervure latérale 421 est axialement adjacente à la première portion 4211 de la première nervure latérale 421 ; elle s'étend, sur toute la profondeur de la première nervure latérale 421, de l'extrémité de la première portion 4211 jusqu'à la frontière intérieure de la première nervure latérale 421.

La première portion 4111 de la nervure centrale 411 s'étend :
axialement à partir de la frontière extérieure de la nervure centrale 411, la largeur axiale LPC (voir figure 9) de cette première portion 4111 étant, sur 80% de la profondeur radiale PR de la nervure centrale, supérieure ou égale à 20% de la largeur axiale LC de la nervure centrale 411 ;
radialement à partir de la surface de roulement, à l'état neuf, jusqu'à une profondeur radiale P, la profondeur radiale P pouvant varier en fonction de la position axiale - c'est le cas à la figure 9 - la profondeur P étant, sur 95% de l'étendue axiale de la première portion de la nervure centrale, supérieure ou égale à 0.2·PR et inférieure ou égale à 0.8·PR.

La figure 7 illustre comment la profondeur radiale PR d'une nervure centrale est déterminée. En effet, PR la profondeur radiale PR est définie comme étant la plus grande des profondeurs maximales PG et PD des rainures qui se trouvent axialement de part et d'autre de la nervure radiale et la délimitent : en l'occurrence, PR = PD. Les profondeurs maximales PG et PD sont déterminées par rapport à la surface de roulement telle qu'on peut l'interpoler entre deux nervures adjacentes.

A la figure 9, on a indiqué la largeur axiale LPC de la première portion 4111 de la première nervure latérale 411 sur la surface de roulement à l'état neuf ; la largeur LPC est ici égale à 0.50·LC. La deuxième portion 4112 de la nervure centrale 411 est axialement adjacente à la première portion 4111 de la nervure centrale 411 ; elle s'étend, de l'extrémité de la première portion 4111 jusqu'à la frontière intérieure de la première nervure centrale 411 (qui coïncide, sur toute la profondeur de la rainure circonférentielle 142, avec la paroi latérale 1420 de celle-ci).

Les compositions caoutchouteuses formant la deuxième portion de la première nervure latérale, la portion radialement à l'intérieur de la première portion de la nervure centrale et la deuxième portion de la nervure centrale ont toutes une valeur tan δ0 qui est inférieure à la valeur tan δ0 des compositions caoutchouteuses formant la première portion de la première nervure latérale et la première portion de la nervure centrale.

Ce pneumatique selon un mode de réalisation de l'invention permet d'obtenir une nette amélioration en adhérence sur sol mouillé tout en conservant une excellente adhérence sur sol sec. La demanderesse explique cette découverte surprenante de la manière suivante : Dans un pneumatique selon un mode de réalisation de l'invention, contrairement au pneumatique de référence, la nervure latérale extérieure est réalisée dans une composition caoutchouteuse conférant une bonne adhérence sur sol mouillé. Cela va à l'encontre de l'enseignement du document WO 2011/076680 selon lequel il convient de réaliser la nervure extérieure dans une composition caoutchouteuse conférant une bonne adhérence sur sol sec, afin de profiter de la forme trapézoïdale de l'aire de contact. Or, lors du roulage en dérive sévère (c'est-à-dire dans des conditions rencontrées lors d'un roulage sur circuit), on observe un phénomène de cloquage sur une partie significative de la nervure latérale extérieure, ce qui fait que la composition caoutchouteuse conférant une bonne adhérence sur sol sec n'est pas en mesure d'apporter tout le gain escompté à cet endroit. En disposant cette composition caoutchouteuse sur le bord extérieur de la première nervure latérale et sur le bord extérieur d'(au moins) une nervure centrale, on obtient à la fois une bonne adhérence sur sol sec et une protection des nervures centrales contre l'usure prématurée.

De plus, la profondeur réduite de la première portion de la nervure centrale contribue à la réduction de la résistance au roulement du pneumatique.

La figure 11 représente schématiquement le sommet d'un autre pneumatique selon un mode de réalisation de l'invention. A la différence du pneumatique représenté à la figure 10, ce pneumatique comporte deux rainures centrales 411 et 412 comportant chacune une première portion (respectivement 4111 et 4121) réalisée dans une composition caoutchouteuse comportant au moins un élastomère et au moins une charge renforçante comportant un noir de carbone, le noir de carbone représentant un pourcentage supérieur ou égal à 50 % et inférieur ou égal à 100 % du poids de la totalité de la charge renforçante, et une deuxième portion (respectivement 4112 et 4122) réalisée dans une composition caoutchouteuse comportant au moins un élastomère et au moins une charge renforçante, dont éventuellement un noir de carbone, le noir de carbone représentant un pourcentage supérieur ou égal à 0 % et inférieur ou égal à 50 % du poids de la totalité de la charge renforçante.

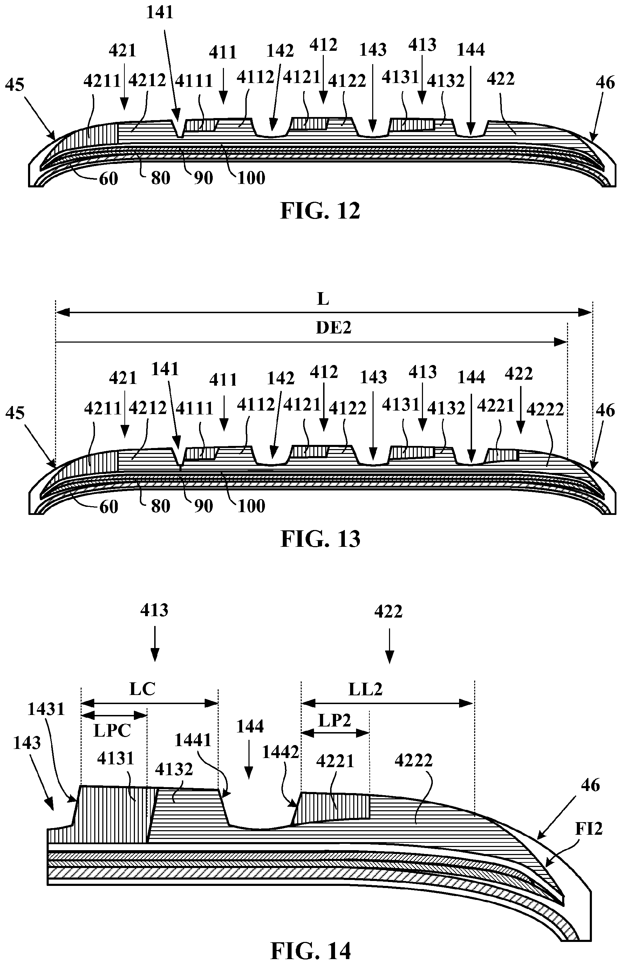

La figure 12 représente schématiquement le sommet d'un autre pneumatique selon un mode de réalisation de l'invention. A la différence du pneumatique représenté à la figure 10, ce pneumatique comporte trois rainures centrales 411 à 413 comportant chacune une première portion (respectivement 4111, 4121 et 4131) réalisée dans une composition caoutchouteuse comportant au moins un élastomère et au moins une charge renforçante comportant un noir de carbone, le noir de carbone représentant un pourcentage supérieur ou égal à 50 % et inférieur ou égal à 100 % du poids de la totalité de la charge renforçante, et une deuxième portion (respectivement 4112, 4122 et 4132) réalisée dans une composition caoutchouteuse comportant au moins un élastomère et au moins une charge renforçante, dont éventuellement un noir de carbone, le noir de carbone représentant un pourcentage supérieur ou égal à 0 % et inférieur ou égal à 50 % du poids de la totalité de la charge renforçante.

Dans les figures 9 à 11 les nervures centrales comportant deux portions sont les nervures centrales les plus proches du bord axial extérieur 45 car ce sont ces nervures centrales qui sont davantage exposées à l'usure et le fait de prévoir la deuxième composition caoutchouteuse sur ces nervures centrales a pour effet de les protéger contre l'usure. Néanmoins, on pourrait parfaitement prévoir que seule la nervure centrale 413 ou seules les nervures centrales 412 et 413 comportent deux portions, etc. C'est par souci de concision que ces modes de réalisation a priori moins avantageux du point de vue de l'usure n'ont pas été représentés.

La figure 13 représente schématiquement le sommet d'un autre pneumatique selon un mode de réalisation de l'invention ; la figure 14 montre une partie de ce même sommet. Le pneumatique représenté comporte une seconde nervure latérale 422, qui est adjacente au bord axial intérieur 46 de la bande de roulement, et délimitée axialement par une frontière extérieure - qui coïncide, sur toute la profondeur de la rainure circonférentielle 144, avec la paroi latérale 1442 de cette rainure (voir figure 14) - et une frontière intérieure FI2 (voir figure 14). La frontière intérieure FI2 se situe, sur toute la profondeur radiale de la seconde nervure latérale 422, à une distance axiale DE2 du bord axial extérieur 45 de la bande de roulement, la distance DE2 étant supérieure ou égale à 0.95·L. A la figure 13, on a indiqué la distance axiale DE2 de la seconde nervure latérale 422 sur la surface de roulement à l'état neuf ; DE2 est ici égal à 0.95·L. La distance axiale entre la frontière extérieure et la frontière intérieure définit une largeur axiale LL2 (voir figure 14) de la seconde nervure latérale 422. En l'occurrence, cette largeur axiale varie selon la profondeur radiale de la seconde nervure latérale 422.

La seconde nervure latérale 422 comporte une première portion 4221 réalisée dans une composition caoutchouteuse comportant au moins un élastomère et au moins une charge renforçante comportant un noir de carbone, le noir de carbone représentant un pourcentage supérieur ou égal à 50 % et inférieur ou égal à 100 % du poids de la totalité de la charge renforçante, et une deuxième portion 4222 réalisée dans une composition caoutchouteuse comportant au moins un élastomère et au moins une charge renforçante, dont éventuellement un noir de carbone, le noir de carbone représentant un pourcentage supérieur ou égal à 0 % et inférieur ou égal à 50 % du poids de la totalité de la charge renforçante.

La première portion 4221 de la seconde nervure latérale 422 s'étend de la frontière extérieure de la seconde nervure latérale 422 axialement vers extérieur, la largeur axiale LP2 de cette portion étant, sur 95% de la profondeur radiale de la nervure latérale, supérieure ou égale à 20% de la largeur axiale LL2 de la seconde nervure latérale 422. A la figure 14, on a indiqué la largeur axiale LP2 de la première portion 4221 de la seconde nervure latérale 422 sur la surface de roulement à l'état neuf ; la largeur LP2 est ici égale à 0.40·LL2. La deuxième portion 4222 de la seconde nervure latérale 422 est axialement adjacente à la première portion 4221 de la seconde nervure latérale 422 ; elle s'étend, sur toute la profondeur de la seconde nervure latérale 422, de l'extrémité de la première portion 4221 jusqu'à la frontière intérieure FI2 de la seconde nervure latérale 422.

La composition caoutchouteuse formant la deuxième portion 4222 de la seconde nervure latérale 422 a une valeur tan 50 qui est inférieure à la valeur tan 50 de la composition caoutchouteuse formant la première portion 4221 de la seconde nervure latérale 422.

La personne du métier comprendra que l'invention n'est nullement limitée à un pneumatique comportant trois nervures centrales ; on peut parfaitement imaginer des modes de réalisation comportant une, deux ou plus de trois nervures centrales.

De même, lorsque plusieurs nervures centrales comportent une première portion, il n'est pas nécessaire que la profondeur radiale de toutes les premières portions soit supérieure ou égale à 0.2·PR et inférieure ou égale à 0.8·PR ; il est suffisant que ce soit le cas pour l'une au moins des nervures centrales.

Le Tableau I donne, à titre d'exemple, la composition de compositions caoutchouteuses pouvant être utilisés. La composition est donnée en pce (« pour cent élastomère »), c'est-à-dire en parties en poids pour 100 parties en poids d'élastomère.

**Tableau I**

| | Composition caoutchouteuse formant la première portion de la nervure | Composition caoutchouteuse formant la deuxième portion de la nervure |
|---|---|---|
| Elastomère SBR [1] | 100 | 100 |
| N 234 [2] | 100 | - |
| Silice | - | 100 |
| Agent de couplage TESPT (Si 69 Degussa) | - | 8.0 |
| Plastifiant [3] | 50 | 50 |
| Cire ozone C32 ST | 1.5 | 1.5 |
| Agent antioxydant (6PPD) [4] | 2.0 | 2.0 |
| Diphénylguanidine (DPG) | - | 1.7 |
| ZnO | 1.8 | 1.8 |
| Acide stéarique | 2.0 | 2.0 |
| Soufre | 1.3 | 1.3 |
| Accélérateur (CBS) | 1.95 | 1.95 |

| | | |
|---|---|---|
| Annotations au Tableau I : [1] SSBR avec 40 % de styrène, 48 % de motifs polybutadiène 1-4 trans [2] Noir de carbone série 230 (ASTM) [3] Huile TDAE (« treated distillate aromatic extract ») [4] N-(1,3-diméthylbutyl)-N'-phényl-p-phénylènediamine | | |

Les compositions caoutchouteuses sont préférentiellement à base d'au moins un élastomère diénique, une charge renforçante et un système de réticulation.

Par élastomère (ou indistinctement caoutchouc) « diénique », on entend de manière connue un élastomère issu au moins en partie (i.e., un homopolymère ou un copolymère) de monomères diènes c'est-à-dire de monomères porteurs de deux doubles liaisons carbone-carbone, conjuguées ou non. L'élastomère diénique utilisé est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères.

Un mode de réalisation préférentiel consiste à utiliser un élastomère « isoprénique », c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon d'autres modes de réalisation préférentiels, l'élastomère diénique peut être constitué, en tout ou partie, d'un autre élastomère diénique tel que, par exemple, un élastomère SBR (E-SBR ou S-SBR) utilisé en coupage ou non avec un autre élastomère, par exemple du type BR.

La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou des charges inorganiques comme la silice, des agents de couplage pour charge inorganique, des agents anti-vieillissement, des antioxydants, des agents plastifiants ou des huiles d'extension, que ces derniers soient de nature aromatique ou non aromatique (notamment des huiles très faiblement ou non aromatiques, par exemple du type naphténiques ou paraffiniques, à haute ou de préférence à basse viscosité, des huiles MES ou TDAE, des résines plastifiantes à haute Tg supérieure à 30°C), des agents facilitant la mise en oeuvre (processabilité) des compositions à l'état cru, des résines tackifiantes, un système de réticulation à base soit de soufre, soit de donneurs de soufre et/ou de peroxyde, des accélérateurs, des activateurs ou retardateurs de vulcanisation, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt ou de nickel.

Les compositions sont fabriquées dans des mélangeurs appropriés, en utilisant deux phases de préparation successives bien connues de l'homme du métier : une première phase de travail ou malaxage thermomécanique (phase dite « non productive ») à haute température, jusqu'à une température maximale comprise entre 110°C et 190°C, de préférence entre 130°C et 180°C, suivie d'une seconde phase de travail mécanique (phase dite « productive ») jusqu'à une plus basse température, typiquement inférieure à 110°C, phase de finition au cours de laquelle est incorporé le système de réticulation.

A titre d'exemple, la phase non productive est conduite en une seule étape thermomécanique de quelques minutes (par exemple entre 2 et 10 min) au cours de laquelle on introduit, dans un mélangeur approprié tel qu'un mélangeur interne usuel, tous les constituants de base nécessaires et autres additifs, à l'exception du système de réticulation ou vulcanisation. Après refroidissement de la composition caoutchouteuse ainsi obtenue, on incorpore alors dans un mélangeur externe tel qu'un mélangeur à cylindres, maintenu à basse température (par exemple entre 30°C et 100°C), le système de vulcanisation. L'ensemble est alors mélangé (phase productive) pendant quelques minutes (par exemple entre 5 et 15 min).

La vulcanisation (ou cuisson) peut être conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

Le Tableau II donne les propriétés des compositions caoutchouteuses dont la composition est indiquée au Tableau I.

**Tableau II**

| | Composition caoutchouteuse formant la première portion de la nervure | Composition caoutchouteuse formant la deuxième portion de la nervure |
|---|---|---|
| tan δ0, à 0.7 MPa | 0.76 | 0.88 |
| tan δ10, à 0.7 MPa | 0.69 | 0.58 |

Ces propriétés sont mesurées sur un viscoanalyseur, connu sous le nom de « Metravib VA4000 » (marque déposée), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, lors d'un balayage en température entre 0° et 100°C, sous une contrainte fixe de 0,7 MPa, on enregistre notamment la valeur de tan δ observée à 0°C et les valeurs de tan δ observées à 10°C.

On rappelle que, de manière bien connue de l'homme du métier, la valeur de tan δ à 0°C (« tan δ0 ») est représentative du potentiel d'adhérence sur sol mouillé : plus tan δ à 0°C est élevée, meilleure est l'adhérence. Les valeurs de tan δ aux températures supérieures à 10°C sont représentatives de l'hystérèse du matériau et du potentiel d'adhérence sur sol sec.

Pour revenir aux compositions caoutchouteuses dont la composition est indiquée au Tableau I, on constate que la composition formant les deuxièmes portions présente une valeur de tan δ à 0°C (contrainte imposée 0.7 MPa) plus élevée par rapport à la composition, formant les premières portions, ce qui indique que l'adhérence sur sol mouillé sera supérieure ; et une valeur de tan δ à 10°C (« tan δ10 ») plus faible par rapport à la première composition, ce qui indique que l'adhérence sur sol sec sera inférieure.

Des essais ont été effectués sur un véhicule connu sous le nom de « BMW 330i » (marque déposée) équipé de pneumatiques Pilot Super Sport de dimension 235/35 R19. Un pneumatique équipé d'une bande de roulement telle que représentée à la figure 10 a été comparé à un pneumatique dé référence équipé d'une bande de roulement telle que représentée à la figure 8 et un pneumatique intermédiaire dans lequel la première partie de la nervure centrale s'étend sur toute la profondeur radiale de la nervure centrale. Les compositions caoutchouteuses du Tableau I ont été utilisées. Les pneumatiques selon un mode de réalisation de l'invention ont permis de maintenir le temps au tour (circuit de Charade (France) ; longueur de circuit : 4 km) sur sol sec. Le freinage sur sol mouillé, en revanche, est significativement amélioré (de 2%), alors qu'il n'y a pas de différence en freinage sur sol sec. Le fait de limiter la profondeur de la première partie de la nervure centrale a pour effet de réduire la résistance au roulement de 3%.

## Revendications

1. Pneumatique destiné à être monté sur une jante de montage d'une roue d'un véhicule et ayant un sens de montage sur le véhicule prédéterminé, comportant une bande de roulement (40) s'étendant entre un bord axial extérieur (45) et un bord axial intérieur (46), le bord axial intérieur étant le bord destiné à être monté du côté de la caisse du véhicule lorsque le pneumatique est monté sur le véhicule selon ledit sens de montage prédéterminé, la distance axiale entre le bord axial extérieur et le bord axial intérieur définissant une largeur axiale L de la bande de roulement ;
dans lequel la bande de roulement comporte, dans toute section radiale, au moins une nervure centrale (411-413) et deux nervures latérales (421,422), les nervures latérales étant disposées de part et d'autre de ladite au moins une nervure centrale, les nervures étant séparées par des rainures circonférentielles (141-144) comportant chacune deux parois latérales (1410,1411,1420,1431,1441,1442) ;
dans lequel chaque nervure centrale est délimitée axialement par une frontière extérieure et par une frontière intérieure, chaque frontière étant formée par une paroi latérale d'une rainure circonférentielle, la frontière intérieure étant axialement plus proche du bord axial intérieur de la bande de roulement que la frontière extérieure, la distance axiale, sur la surface de roulement à l'état neuf, entre la frontière extérieure et la frontière intérieure définissant une largeur axiale LC de la nervure centrale ;
dans lequel une première nervure latérale (421) est adjacente au bord axial extérieur de la bande de roulement et délimitée axialement par une frontière extérieure (FE1) et une frontière intérieure, la frontière extérieure (FE1) se situant, sur toute la profondeur radiale de la première nervure latérale, à une distance axiale DE1 du bord axial intérieur (46) de la bande de roulement (40), la distance DE1 étant supérieure ou égale à 0.95·L, la frontière intérieure étant formée, au moins en partie, par une paroi latérale (1410) d'une rainure circonférentielle (141), la distance axiale entre la frontière extérieure et la frontière intérieure définissant une largeur axiale LL1 de la première nervure latérale ;
**caractérisé en ce que** la première nervure latérale et au moins une et de préférence chacune des nervures centrales comportent une première portion (4211, 4111, 4121, 4131) réalisée dans une composition caoutchouteuse comportant au moins un élastomère et au moins une charge renforçante comportant un noir de carbone, le noir de carbone représentant un pourcentage supérieur ou égal à 50 % et inférieur ou égal à 100 % du poids de la totalité de la charge renforçante, et une deuxième portion (4212, 4112, 4122, 4132) réalisée dans une composition caoutchouteuse comportant au moins un élastomère et au moins une charge renforçante, dont éventuellement un noir de carbone, le noir de carbone représentant un pourcentage supérieur ou égal à 0 % et inférieur ou égal à 50 % du poids de la totalité de la charge renforçante ;
dans lequel la première portion de la première nervure latérale s'étend de la frontière extérieure de la première nervure latérale axialement vers l'intérieur, la largeur axiale LP1 de cette portion étant, sur toute la profondeur radiale de la nervure latérale, supérieure ou égale à 20% de la largeur axiale LL1 de la première nervure latérale, et dans lequel la deuxième portion de la première nervure latérale est axialement adjacente à la première portion de la première nervure latérale ;
dans lequel la première portion de la nervure centrale s'étend :
axialement à partir de la frontière extérieure de la nervure centrale, la largeur axiale LPC de cette portion étant, sur au moins 75% de la profondeur radiale PR de la nervure centrale, supérieure ou égale à 20% de la largeur axiale LC de la nervure centrale, et
radialement à partir de la surface de roulement, à l'état neuf, jusqu'à une profondeur radiale P, la profondeur radiale P pouvant varier en fonction de la position axiale, la profondeur P étant, sur au moins 75% de l'étendue axiale de la première portion de la nervure centrale, supérieure ou égale à 0.2·PR et inférieure ou égale à 0.8·PR;
dans lequel la deuxième portion de la nervure centrale est axialement adjacente à la première portion de la nervure centrale;
dans lequel les compositions caoutchouteuses formant la deuxième portion de la première nervure latérale, la portion radialement à l'intérieur de la première portion de la nervure centrale et la deuxième portion de la nervure centrale ont toutes une valeur tan δ0 qui est inférieure à la valeur tan δ0 des compositions caoutchouteuses formant la première portion de la première nervure latérale et la première portion de la nervure centrale, où tan δ0 désigne la valeur de tan δ mesurée à la température de 0° C et sous une contrainte de 0.7 MPa.

2. Pneumatique selon la revendication 1, dans lequel la largeur axiale LP1 de la première portion (4211) de la première nervure latérale (421) est, sur toute la profondeur radiale de la première nervure latérale, inférieure ou égale à 60% de la largeur axiale LL1 de la première nervure latérale.

3. Pneumatique selon l'une quelconque des revendications 1 ou 2, dans lequel la largeur axiale LPC de la première portion (4111, 4121, 4131) de la nervure centrale (411-413) est, sur toute sa profondeur radiale, inférieure ou égale à 60% de la largeur axiale LC de la nervure centrale.

4. Pneumatique selon l'une quelconque des revendications 1 à 3, dans lequel une seconde nervure latérale (422) est adjacente au bord axial intérieur (46) de la bande de roulement (40) et délimitée axialement par une frontière extérieure et une frontière intérieure (FI2), la frontière intérieure se situant, sur toute la profondeur radiale de la seconde nervure latérale, à une distance axiale DE2 du bord axial extérieur (45) de la bande de roulement, la distance DE2 étant supérieure ou égale à 0.95·L, la frontière extérieure étant formée, au moins en partie, par une paroi latérale d'une rainure circonférentielle, la distance axiale entre la frontière extérieure et la frontière intérieure définissant une largeur axiale LL2 de la seconde nervure latérale ;
dans lequel la seconde nervure latérale comporte une première portion (4221) réalisée dans une composition caoutchouteuse comportant au moins un élastomère et au moins une charge renforçante comportant un noir de carbone, le noir de carbone représentant un pourcentage supérieur ou égal à 50 % et inférieur ou égal à 100 % du poids de la totalité de la charge renforçante, et une deuxième portion (4222) réalisée dans une composition caoutchouteuse comportant au moins un élastomère et au moins une charge renforçante, dont éventuellement un noir de carbone, le noir de carbone représentant un pourcentage supérieur ou égal à 0 % et inférieur ou égal à 50 % du poids de la totalité de la charge renforçante ;
dans lequel la première portion de la seconde nervure latérale s'étend de la frontière extérieure de la seconde nervure latérale axialement vers extérieur, la largeur axiale LP2 de cette portion étant, sur au moins 75% de sa profondeur radiale, supérieure ou égale à 20% de la largeur axiale LL2 de la seconde nervure latérale, et dans lequel la deuxième portion de la seconde nervure latérale est axialement adjacente à la première portion de la seconde nervure latérale ;
dans lequel la composition caoutchouteuse formant la deuxième portion de la seconde nervure latérale a une valeur tan 50 qui est inférieure à la valeur tan δ0 de la composition caoutchouteuse formant la première portion de la seconde nervure latérale.

5. Pneumatique selon la revendication 4, dans lequel la largeur axiale LP2 de la première portion (4221) de la seconde nervure latérale (422) est inférieure ou égale à 60% de la largeur axiale LL2 de la seconde nervure latérale.

6. Pneumatique selon l'une quelconque des revendications 1 à 5, dans lequel, pour chaque nervure (411-413,421-422) comportant une première (4111,4121,4131, 4211,4221) et une deuxième portion (4112,4122,4132,4212,4222), la différence entre la valeur tan δ0 de la composition caoutchouteuse formant la première portion de la nervure et la valeur tan δ0 de la composition caoutchouteuse formant la deuxième portion de la même nervure est supérieure ou égale à 0.05.

7. Pneumatique selon l'une quelconque des revendications 1 à 6, dans lequel, pour chaque nervure (411-413,421-422) comportant une première (4111,4121,4131, 4211,4221) et une deuxième portion (4112,4122,4132,4212,4222), la composition caoutchouteuse formant la première portion de la nervure a en outre une valeur tan δ10 qui est inférieure à la valeur tan δ10 de la composition caoutchouteuse formant la deuxième portion de la même nervure, où tan δ10 désigne la valeur de tan δ mesurée à la température de 10° C et sous une contrainte de 0.7 MPa.

8. Pneumatique selon la revendication 7, dans lequel, pour chaque nervure (411-413,421-422) comportant une première (4111,4121,4131, 4211,4221) et une deuxième portion (4112,4122,4132,4212,4222), la différence entre la valeur tan δ10 de la composition caoutchouteuse formant la première portion de la nervure et la valeur tan δ10 de la composition caoutchouteuse formant la deuxième portion de la même nervure est supérieure ou égale à 0.05.

9. Pneumatique selon l'une quelconque des revendications 1 à 8, dans lequel la même composition caoutchouteuse forme la première portion (4111,4121,4131, 4211,4221) de toutes les nervures (411-413,421-422) comportant une première et une deuxième portion, et la même composition caoutchouteuse forme la deuxième portion (4112,4122,4132,4212,4222) de ces nervures.

## Patentansprüche

1. Reifen zur Anbringung an eine Montagefelge eines Rads eines Fahrzeugs und mit einer vorbestimmten Anbringungsrichtung an dem Fahrzeug, aufweisend einen Laufstreifen (40), der sich zwischen einem äußeren axialen Rand (45) und einem inneren axialen Rand (46) erstreckt, wobei der innere axiale Rand der Rand ist, der dazu bestimmt ist, auf der Seite der Karosserie des Fahrzeugs angebracht zu sein, wenn der Reifen gemäß der vorbestimmten Anbringungsrichtung an dem Fahrzeug angebracht ist, wobei der axiale Abstand zwischen dem äußeren axialen Rand und dem inneren axialen Rand eine axiale Breite L des Laufstreifens definiert;
wobei der Laufstreifen im gesamten radialen Querschnitt mindestens eine Mittelrippe (411 - 413) und zwei Seitenrippen (421, 422) aufweist, wobei die Seitenrippen beiderseits der mindestens einen Mittelrippe angeordnet sind, wobei die Rippen durch Umfangsrillen (141 - 144) getrennt sind, die jeweils zwei Seitenwände (1410, 1411, 1420, 1431, 1441, 1442) aufweisen;
wobei jede Mittelrippe axial von einer äußeren Grenze und einer inneren Grenze begrenzt ist, wobei jede Grenze von einer Seitenwand einer Umfangsrille gebildet ist, wobei die innere Grenze axial näher an dem inneren axialen Rand des Laufstreifens gelegen ist als die äußere Grenze, wobei der axiale Abstand auf der Lauffläche im Neuzustand zwischen der äußeren Grenze und der inneren Grenze eine axiale Breite LC der Mittelrippe definiert;
wobei eine erste Seitenrippe (421) an den äußeren axialen Rand des Laufstreifens angrenzt und axial von einer äußeren Grenze (FE1) und einer inneren Grenze begrenzt ist, wobei sich die äußere Grenze (FE1) über die gesamte radiale Tiefe der ersten Seitenrippe in einem axialen Abstand DE1 vom inneren axialen Rand (46) des Laufstreifens (40) befindet, wobei der Abstand DE1 größer oder gleich 0,95·L ist, wobei die innere Grenze zumindest teilweise von einer Seitenwand (1410) einer Umfangsrille (141) gebildet ist, wobei der axiale Abstand zwischen der äußeren Grenze und der inneren Grenze eine axiale Breite LL1 der ersten Seitenrippe definiert;
**dadurch gekennzeichnet, dass** die erste Seitenrippe und mindestens eine und vorzugsweise jede der Mittelrippen einen ersten Abschnitt (4211, 4111, 4121, 4131) aufweisen, der in einer Gummizusammensetzung ausgeführt ist, die mindestens ein Elastomer und mindestens einen verstärkenden Füllstoff aufweist, der ein Ruß aufweist, wobei das Ruß einen Prozentsatz größer oder gleich 50 % und kleiner oder gleich 100 % des Gewichts des gesamten verstärkenden Füllstoffs repräsentiert, und einen zweiten Abschnitt (4212, 4112, 4122, 4132), der in einer Gummizusammensetzung ausgeführt ist, die mindestens ein Elastomer und mindestens einen verstärkenden Füllstoff aufweist, davon eventuell ein Ruß, wobei das Ruß einen Prozentsatz größer oder gleich 0 % und kleiner oder gleich 50 % des Gewichts des gesamten verstärkenden Füllstoffs repräsentiert;
wobei sich der erste Abschnitt der ersten Seitenrippe von der äußeren Grenze der ersten Seitenrippe axial nach innen erstreckt, wobei die axiale Breite LP1 dieses Abschnitts über die gesamte radiale Tiefe der Seitenrippe größer oder gleich 20 % der axialen Breite LL1 der ersten Seitenrippe ist, und wobei der zweite Abschnitt der ersten Seitenrippe axial an den ersten Abschnitt der ersten Seitenrippe angrenzt;
wobei sich der erste Abschnitt der Mittelrippe wie folgt erstreckt:
axial von der äußeren Grenze der Mittelrippe, wobei die axiale Breite LPC dieses Abschnitts über mindestens 75 % der radialen Tiefe PR der Mittelrippe größer oder gleich 20 % der axialen Breite LC der Mittelrippe ist, und
radial von der Lauffläche bis zu einer radialen Tiefe P im Neuzustand, wobei die radiale Tiefe P in Abhängigkeit von der axialen Position variieren kann, wobei die Tiefe P über mindestens 75 % der axialen Erstreckung des ersten Abschnitts der Mittelrippe größer oder gleich 0,2·PR und kleiner oder gleich à 0,8·PR ist;
wobei der zweite Abschnitt der Mittelrippe axial an den ersten Abschnitt der Mittelrippe angrenzt;
wobei die Gummizusammensetzungen, die den zweiten Abschnitt der ersten Seitenrippe, den radial inneren Abschnitt des ersten Abschnitts der Mittelrippe und den zweiten Abschnitt der Mittelrippe bilden, alle einen Wert tan δ0 aufweisen, der niedriger als der Wert tan δ0 der Gummizusammensetzungen ist, die den ersten Abschnitt der ersten Seitenrippe und den ersten Abschnitt der Mittelrippe bilden, wobei tan δ0 den Wert von tan δ bezeichnet, der bei der Temperatur von 0°C und unter einer Beanspruchung von 0,7 MPa gemessen wird.

2. Reifen nach Anspruch 1, wobei die axiale Breite LP1 des ersten Abschnitts (4211) der ersten Seitenrippe (421) über die gesamte radiale Tiefe der ersten Seitenrippe kleiner oder gleich 60 % der axialen Breite LL1 der ersten Seitenrippe ist.

3. Reifen nach einem der Ansprüche 1 oder 2, wobei die axiale Breite LPC des ersten Abschnitts (4111, 4121, 4131) der Mittelrippe (411 - 413) über deren gesamte radiale Tiefe kleiner oder gleich 60 % der axialen Breite LC der Mittelrippe ist.

4. Reifen nach einem der Ansprüche 1 bis 3, wobei eine zweite Seitenrippe (422) an den inneren axialen Rand (46) des Laufstreifens (40) angrenzt und axial von einer äußeren Grenze und einer inneren Grenze (FI2) begrenzt ist, wobei sich die innere Grenze über die gesamte radiale Tiefe der zweiten Seitenrippe in einem axialen Abstand DE2 vom äußeren axialen Rand (45) des Laufstreifens befindet, wobei der Abstand DE2 größer oder gleich 0,95·L ist, wobei die äußere Grenze zumindest teilweise von einer Seitenwand einer Umfangsrille gebildet ist, wobei der axiale Abstand zwischen der äußeren Grenze und der inneren Grenze eine axiale Breite LL2 der zweiten Seitenrippe definiert; wobei die zweite Seitenrippe einen ersten Abschnitt (4221) aufweist, der in einer Gummizusammensetzung ausgeführt ist, die mindestens ein Elastomer und mindestens einen verstärkenden Füllstoff aufweist, der ein Ruß aufweist, wobei das Ruß einen Prozentsatz größer oder gleich 50 % und kleiner oder gleich 100 % des Gewichts des gesamten verstärkenden Füllstoffs repräsentiert, und einen zweiten Abschnitt (4222), der in einer Gummizusammensetzung ausgeführt ist, die mindestens ein Elastomer und mindestens einen verstärkenden Füllstoff aufweist, davon eventuell ein Ruß, wobei das Ruß einen Prozentsatz größer oder gleich 0 % und kleiner oder gleich 50 % des Gewichts des gesamten verstärkenden Füllstoffs repräsentiert;
wobei sich der erste Abschnitt der zweiten Seitenrippe von der äußeren Grenze der zweiten Seitenrippe axial nach außen erstreckt, die axiale Breite LP2 dieses Abschnitts über mindestens 75 % seiner radialen Tiefe größer oder gleich 20 % der axialen Breite LL2 der zweiten Seitenrippe ist, und wobei der zweite Abschnitt der zweiten Seitenrippe axial an den ersten Abschnitt der zweiten Seitenrippe angrenzt;
wobei die Gummizusammensetzung, die den zweiten Abschnitt der zweiten Seitenrippe bildet, einen Wert tan δ0 aufweist, der kleiner als der Wert tan δ0 der Gummizusammensetzung ist, die den ersten Abschnitt der zweiten Seitenrippe bildet.

5. Reifen nach Anspruch 4, wobei die axiale Breite LP2 des ersten Abschnitts (4221) der zweiten Seitenrippe (422) kleiner oder gleich 60 % der axialen Breite LL2 der zweiten Seitenrippe ist.

6. Reifen nach einem der Ansprüche 1 bis 5, wobei für jede Rippe (411 - 413, 421 - 422), die einen ersten (4111, 4121, 4131, 4211, 4221) und einen zweiten Abschnitt (4112, 4122, 4132, 4212, 4222) aufweist, die Differenz zwischen dem Wert tan δ0 der Gummizusammensetzung, die den ersten Abschnitt der Rippe bildet, und dem Wert tan δ0 der Gummizusammensetzung, die den zweiten Abschnitt derselben Rippe bildet, größer oder gleich 0,05 ist.

7. Reifen nach einem der Ansprüche 1 bis 6, wobei für jede Rippe (411 - 413, 421 - 422), die einen ersten (4111, 4121, 4131, 4211, 4221) und einen zweiten Abschnitt (4112, 4122, 4132, 4212, 4222) aufweist, die Gummizusammensetzung, die den ersten Abschnitt der Rippe bildet, ferner einen Wert tan δ10 aufweist, der kleiner als der Wert tan δ10 der Gummizusammensetzung ist, die den zweiten Abschnitt derselben Rippe bildet, wobei tan δ10 den Wert von tan δ bezeichnet, der bei der Temperatur von 10°C und unter einer Beanspruchung von 0,7 MPa gemessen wird.

8. Reifen nach Anspruch 7, wobei für jede Rippe (411 - 413, 421 - 422), die einen ersten (4111, 4121, 4131, 4211, 4221) und einen zweiten Abschnitt (4112, 4122, 4132, 4212, 4222) aufweist, die Differenz zwischen dem Wert tan δ10 der Gummizusammensetzung, die den ersten Abschnitt der Rippe bildet, und dem Wert tan δ10 der Gummizusammensetzung, die den zweiten Abschnitt derselben Rippe bildet, größer oder gleich 0,05 ist.

9. Reifen nach einem der Ansprüche 1 bis 8, wobei dieselbe Gummizusammensetzung den ersten Abschnitt (4111, 4121, 4131, 4211,4221) aller Rippen (411 - 413, 421 - 422) bildet, die einen ersten und einen zweiten Abschnitt aufweisen, und dieselbe Gummizusammensetzung den zweiten Abschnitt (4112, 4122, 4132, 4212, 4222) dieser Rippen bildet.

## Claims

1. Tyre intended to be mounted on a mounting rim of a wheel of a vehicle and having a predetermined direction of mounting on the vehicle, comprising a tread (40) extending between an outer axial edge (45) and an inner axial edge (46), the inner axial edge being the edge intended to be mounted on the vehicle body shell side when the tyre is mounted on the vehicle in the said predetermined direction of mounting, the axial distance between the outer axial edge and the inner axial edge defining an axial width L of the tread;
in which the tread comprises, in any radial section, at least one central rib (411-413) and two lateral ribs (421, 422), the lateral ribs being positioned one on each side of the said at least one central rib, the ribs being separated by circumferential grooves (141-144) each having two lateral walls (1410, 1411, 1420, 1431, 1441, 1442);
in which each central rib is axially delimited by an outer boundary and by an inner boundary, each boundary being formed by a lateral wall of a circumferential groove, the inner boundary being axially closer to the inner axial edge of the tread than the outer boundary, the axial distance, on the tread surface in the new state, between the outer boundary and the inner boundary defining an axial width LC of the central rib;
in which a first lateral rib (421) is adjacent to the outer axial edge of the tread and delimited axially by an outer boundary (FE1) and an inner boundary, the outer boundary (FE1) being situated, over the entire radial depth of the first lateral rib, an axial distance DE1 from the inner axial edge (46) of the tread (40), the distance DE1 being greater than or equal to 0.95·L, the inner boundary being formed, at least in part, by a lateral wall (1410) of a circumferential groove (141), the axial distance between the outer boundary and the inner boundary defining an axial width LL1 of the first lateral rib;
in which the first lateral rib and at least one and preferably each of the central ribs comprise a first portion (4211, 4111, 4121, 4131) made of a rubber composition containing at least one elastomer and at least one reinforcing filler containing a carbon black, the carbon black representing a percentage greater than or equal to 50% and less than or equal to 100% of the weight of all the reinforcing filler, and a second portion (4212, 4112, 4122, 4132) made of a rubber composition containing at least one elastomer and at least one reinforcing filler, possibly including a carbon black, the carbon black representing a percentage greater than or equal to 0% and less than or equal to 50% of the weight of all the reinforcing filler;
in which the first portion of the first lateral rib extends from the outer boundary of the first lateral rib axially inwards, the axial width LP1 of this portion being, over the entire radial depth of the lateral rib, greater than or equal to 20% of the axial width LL1 of the first lateral rib, and in which the second portion of the first lateral rib is axially adjacent to the first portion of the first lateral rib;
in which the first portion of the central rib extends:
axially from the outer boundary of the central rib, the axial width LPC of this portion being, over at least 75% of the radial depth PR of the central rib, greater than or equal to 20% of the axial width LC of the central rib, and
radially from the tread surface, when new, as far as a radial depth P, the radial depth P being able to vary as a function of the axial position, the depth P being, over at least 75% of the axial extent of the first portion of the central rib, greater than or equal to 0.2·PR and less than or equal to 0.8·PR;
in which the second portion of the central rib is axially adjacent to the first portion of the central rib;
in which the rubber compositions that make up the second portion of the first lateral rib, the portion radially on the inside of the first portion of the central rib and the second portion of the central rib all have a tan δ0 value which is less than the tan δ0 value of the rubber compositions that form the first portion of the first lateral rib and the first portion of the central rib, where tan δ0 denotes the tan δ value measured at a temperature of 0°C and under a stress of 0.7 MPa.

2. Tyre according to Claim 1, in which the axial width LP1 of the first portion (4211) of the first lateral rib (421) is, over the entire radial depth of the first lateral rib, less than or equal to 60% of the axial width LL1 of the first lateral rib.

3. Tyre according to either one of Claims 1 and 2, in which the axial width LPC of the first portion (4111, 4121, 4131) of the central rib (411-413) is, over its entire radial depth, less than or equal to 60% of the axial width LC of the central rib.

4. Tyre according to any one of Claims 1 to 3, in which a second lateral rib (422) is adjacent to the inner axial edge (46) of the tread (40) and axially delimited by an outer boundary and an inner boundary (FI2), the inner boundary being situated, over the entire radial depth of the second lateral rib, an axial distance DE2 from the outer axial edge (45) of the tread, the distance DE2 being greater than or equal to 0.95·L, the outer boundary being formed, at least in part, by a lateral wall of a circumferential groove, the axial distance between the outer boundary and the inner boundary defining an axial width LL2 of the second lateral rib;
in which the second lateral rib comprises a first portion (4221) made of a rubber composition containing at least one elastomer and at least one reinforcing filler containing a carbon black, the carbon black representing a percentage greater than or equal to 50% and less than or equal to 100% of the weight of all the reinforcing filler, and a second portion (4222) made of a rubber composition containing at least one elastomer and at least one reinforcing filler, possibly including a carbon black, the carbon black representing a percentage greater than or equal to 0% and less than or equal to 50% of the weight of all the reinforcing filler;
in which the first portion of the second lateral rib extends from the outer boundary of the second lateral rib axially outwards, the axial width LP2 of this portion being, over at least 75% of its radial depth, greater than or equal to 20% of the axial width LL2 of the second lateral rib, and in which the second portion of the second lateral rib is axially adjacent to the first portion of the second lateral rib;
in which the rubber composition forming the second portion of the second lateral rib has a tan δ0 value which is less than the tan δ0 value of the rubber composition that forms the first portion of the second lateral rib.

5. Tyre according to Claim 4, in which the axial width LP2 of the first portion (4221) of the second lateral rib (422) is less than or equal to 60% of the axial width LL2 of the second lateral rib.

6. Tyre according to any one of Claims 1 to 5, in which, for each rib (411-413, 421-422) comprising a first (4111, 4121, 4131, 4211, 4221) and a second portion (4112, 4122, 4132, 4212, 4222), the difference between the tan δ0 value of the rubber composition that forms the first portion of the rib and the tan δ0 value of the rubber composition that forms the second portion of the same rib is greater than or equal to 0.05.

7. Tyre according to any one of Claims 1 to 6, in which, for each rib (411-413, 421-422) comprising a first (4111, 4121, 4131, 4211, 4221) and a second portion (4112, 4122, 4132, 4212, 4222), the rubber composition that forms the first portion of the rib also has a tan δ10 value which is less than the tan δ10 value of the rubber composition that forms the second portion of the same rib, where tan δ10 denotes the tan δ value measured at a temperature of 10°C and under a stress of 0.7 MPa.

8. Tyre according to Claim 7, in which, for each rib (411-413, 421-422) comprising a first (4111, 4121, 4131, 4211, 4221) and a second portion (4112, 4122, 4132, 4212, 4222), the difference between the tan δ10 value of the rubber composition that forms the first portion of the rib and the tan δ10 value of the rubber composition that forms the second portion of the same rib is greater than or equal to 0.05.

9. Tyre according to any one of Claims 1 to 8, in which the same rubber composition forms the first portion (4111, 4121, 4131, 4211, 4221) of all the ribs (411-413, 421-422) that have a first and a second portion, and the same rubber composition forms the second portion (4112, 4122, 4132, 4212, 4222) of these ribs.
